# EUROPEAN PATENT APPLICATION

(11) **EP 4 539 020 A1**
(43) Date of publication of application: **16.04.2025**
(21) Application number: 23863439.8
(22) Date of filing: 04.09.2023
(51) Int. Cl.: G09B 21/00, G06F 3/00, G10L 15/26, G06F 3/048, G06F 3/16

(54) **DISPLAY-BASED COMMUNICATION SYSTEM**

(30) Priority: 05.09.2022 KR 20220112258
(71) Applicant: Batoners Inc., Daejeon 34141 (KR)
(72) Inventor: JANG, Jun Soo, Seoul 08329 (KR); LEE, Ji Su, Seoul 02874 (KR)
(74) Representative: Peterreins Schley
(86) International application number: PCT/KR2023/013179
(87) International publication number: WO 2024/053967

(57) **Abstract**

The present disclosure provides a communication assist device for communication using a sign language that includes a sign language recognition module for extracting a sign language sentence from an analyzed motion of a user in image data and a transparent display for displaying the extracted sign language sentence.

## Description

### Technical Field

The present disclosure relates to a communication system, and more particularly, to a display-based communication system.

### Background Art

The term "hearing-impaired people" is an expression generically referring to people with degraded hearing or hearing failure. The hearing-impaired people can communicate mainly in three ways depending on degrees of hearing disability. First, in case the degree of hearing disability is low, hearing may be improved using a hearing assist device so that communication with the non-disabled is possible by means of spoken language. Second, communication with the non-disabled may be possible using the oral method that infers messages by reading an interlocutor's lips. And finally, communication with the non-disabled may also be possible using a sign language.

The hearing-impaired people already had trouble communicating, and the COVID-19 pandemic from the year 2020 aggravated the difficulty of communication. For example, since transparent sneeze guards were installed at application and counseling desks due to the spread of COVID-19, the hearing-impaired people had trouble understanding voices from the other side. In addition, especially when a transparent guard is contaminated, a hearing-impaired person can hardly read an interlocutor's lips or sign language motions, thereby aggravating difficulty of communication.

In addition, since most services for sign language users are not provided based on sign languages, various technological developments are required for improving service accessibility for sign language users.

### Disclosure

### Technical Problem

The present disclosure is directed to providing a display-based sign language communication system for improving accuracy and convenience of sign language communication.

### Technical Solution

The present disclosure provides a communication assist device for communication using a sign language that includes a sign language recognition module for extracting a sign language sentence from an analyzed motion of a user in image data and a display for displaying the extracted sign language sentence.

According to an embodiment, the communication assist device may further include an STT module for converting voice data into text data and a sign language generation module for converting voice data into sign language data.

According to an embodiment, the communication assist device may further include a word card selection module for providing a word card selectable for the user to the display, and the sign language recognition module extracts the sign language sentence based on the selected word card.

According to an embodiment, the communication assist device may further include a text input module for providing a user interface for the user to input a text to the display, and the text input module may be activated when the sign language recognition module fails to extract the sign language sentence.

According to an embodiment, the communication assist device may further include a communication module for controlling the communication assist device to be communicatively connected with external device, and the communication module may control the communication assist device to be connected with the external device when the sign language recognition module fails to extract the sign language sentence.

According to an embodiment, the sign language recognition module may partition the image data into a plurality of segments, determine a recognition accuracy of each gloss of the plurality of segments, and extract a sign language sentence based on a gloss with the recognition accuracy greater than a predetermined value among glosses of the plurality of segments.

According to an embodiment, the recognition accuracy may be determined based on a similarity between a gloss of a segment and a similar gloss, and the similar gloss may be a gloss that is most similar to the gloss of the segment.

According to an embodiment, the sign language recognition module may extract skeleton information for tracking a motion of the user by detecting a joint part of the user from the image data and compare a gloss of the user according to the skeleton information and the similar gloss.

According to an embodiment, the display may display a message for requesting retransmission of a sign language sentence, when every recognition accuracy of the glosses of the plurality of segments is smaller than the predetermined value.

According to an embodiment, the sign language recognition module may extract a sign language sentence based on a gloss with the recognition accuracy greater than the predetermined value and a previous conversation content.

According to an embodiment, when the glosses of the plurality of segments include a first gloss with a recognition accuracy greater than the predetermined value and a second gloss with a recognition accuracy smaller than the predetermined value, the sign language recognition module may determine a plurality of gloss candidates replacing the second gloss based on the first gloss and extract a sign language sentence based on a gloss candidate selected from the plurality of gloss candidates and the first gloss.

According to an embodiment, when the glosses of the plurality of segments include a first gloss with a recognition accuracy greater than the predetermined value and a second gloss with a recognition accuracy smaller than the predetermined value, the sign language recognition module may determine a plurality of gloss candidates replacing the second gloss based on the first gloss and a previous conversation content and extract a sign language sentence based on a gloss candidate selected from the plurality of gloss candidates and the first gloss.

According to an embodiment, the sign language recognition module may determine a priority order for the plurality of gloss candidates according to a similarity to the second gloss, and the display may display the plurality of gloss candidates according to the priority order.

According to an embodiment, the display may be a transparent display.

According to an embodiment, the communication assist device may constitute a communication system together with an input device for receiving the user's voice or sign language image as an input.

The present disclosure may provide a program for implementing various functions and instructions of the communication assist device and a recording medium for storing the program.

### Advantageous Effects

A communication assist device according to the present disclosure may improve accuracy and convenience of sign language-based communication. Particularly, as the accuracy and convenience of communication are improved for sign language users, the sign language users may be provided with services for the non-disabled without inconvenience and without an expert sign language interpreter's help.

In addition, a device for assisting sign language recognition according to the present disclosure may enable a user to control the start and end of sign language inputs with ease. Accordingly, as the user inputs a sign language image into a communication assist device at whatever time the user wants, convenience of sign language communication may be improved.

### Description of Drawings

FIG. 1 illustrates an image display device for communication using a sign language and a system including the image display device.
FIG. 2 and FIG. 3 describe usage aspects of a communication assist device.
FIG. 4 shows an embodiment of an image that is input into a display.
FIG. 5 describes an example of a method for inferring a sign language sentence based on a recognition accuracy.
FIG. 6 is an example of skeleton information extracted from a sign language image.

### Best Mode for Invention

The present disclosure provides a communication assist device for communication using a sign language that includes a sign language recognition module for extracting a sign language sentence from an analyzed motion of a user in image data and a display for displaying the extracted sign language sentence.

### Mode for Invention

A variety of modifications may be made to the present disclosure and there are various embodiments of the present disclosure, examples of which will now be provided with reference to drawings and described in detail. However, the present disclosure is not limited thereto, although the exemplary embodiments can be construed as including all modifications, equivalents, or substitutes in a technical concept and a technical scope of the present disclosure. In the drawings, the similar reference numerals refer to the same or similar functions in various aspects. In the drawings, the shapes and dimensions of elements may be exaggerated for clarity. In the following detailed description of the present invention, references are made to the accompanying drawings that show, by way of illustration, specific embodiments in which the invention may be practiced. These embodiments are described in sufficient detail to enable those skilled in the art to implement the present invention. It should be understood that various embodiments of the present invention, although different, are not necessarily mutually exclusive. For example, specific features, structures, and characteristics described herein, in connection with one embodiment, may be implemented within other embodiments without departing from the spirit and scope of the present disclosure. In addition, it should be understood that the location or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to what the claims claim.

Terms used in the present disclosure, 'first', 'second', etc. can be used to describe various components, but the components are not to be construed as being limited to the terms. The terms are only used to differentiate one component from other components. For example, the "first" component may be named the 'second' component without departing from the scope of the present disclosure, and the 'second' component may also be similarly named the 'first' component. The term 'and/or' includes a combination of a plurality of items or any one of a plurality of terms.

It will be understood that when an element is simply referred to as being 'connected to' or 'coupled to' another element without being 'directly connected to' or 'directly coupled to' another element in the present disclosure, it may be 'directly connected to' or "directly coupled to' another element or be connected to or coupled to another element, having the other element intervening therebetween. In contrast, it should be understood that when an element is referred to as being "directly coupled" or "directly connected" to another element, there are no intervening elements present.

Furthermore, constitutional parts shown in the embodiments of the present disclosure are independently shown so as to represent characteristic functions different from each other. Thus, it does not mean that each constitutional part is constituted in a constitutional unit of separated hardware or software. In other words, each constitutional part includes each of enumerated constitutional parts for convenience. Thus, at least two constitutional parts of each constitutional part may be combined to form one constitutional part or one constitutional part may be divided into a plurality of constitutional parts to perform each function. The embodiment where each constitutional part is combined and the embodiment where one constitutional part is divided are also included in the scope of the present disclosure, if not departing from the essence of the present disclosure.

The terms used in the present disclosure are merely used to describe particular embodiments, and are not intended to limit the present disclosure. An expression used in the singular encompasses the expression of the plural, unless it has a clearly different meaning in the context. **In** the present disclosure, it is to be understood that terms such as "including", "having", etc. are intended to indicate the existence of the features, numbers, steps, actions, elements, parts, or combinations thereof disclosed in the specification, and are not intended to preclude the possibility that one or more other features, numbers, steps, actions, elements, parts, or combinations thereof may exist or may be added. In other words, when a specific element is referred to as being "included", elements other than the corresponding element are not excluded, but additional elements may be included in embodiments of the present disclosure or the scope of the present disclosure.

In addition, some of constituents may not be indispensable constituents performing essential functions of the present disclosure but be selective constituents improving only performance thereof. The present disclosure may be implemented by including only the indispensable constitutional parts for implementing the essence of the present disclosure except the constituents used in improving performance. The structure including only the indispensable constituents except the selective constituents used in improving only performance is also included in the scope of the present disclosure.

Hereinafter, embodiments of the present disclosure will be described in detail with reference to the accompanying drawings. In describing exemplary embodiments of the present disclosure, well-known functions or constructions will not be described in detail since they may unnecessarily obscure the understanding of the present disclosure. The same constituent elements in the drawings are denoted by the same reference numerals, and a repeated description of the same elements will be omitted.

The present disclosure provides a method and system for display-based communication using a sign language and AAC. As the present disclosure provides various embodiments of a sign language and AAC communication method based on a display, sign language and AAC users may have improved communication ability.

Herein, 'sign language' means a language using hands. In addition, 'AAC' means augmentative and alternative communication. Specifically, 'AAC' is intended to improve the ability of expression for a person lacking language ability by using an image that represents a sentence or word. The sign language and AAC are a communication method used by people who have trouble communicating through voices. A sign language sentence may be divided into gloss units that are entries of a sign language. A gloss means a minimum word unit of a sign language, that is, a semantic unit of the sign language.

Hereinafter, an image display device according to the present disclosure is used to assist communication between two or more persons. In the present disclosure, for convenience of explanation, a speaker expressing his intention is described as "user", and a listener receiving the user's intention is described as "interlocutor". Accordingly, the positions of "user" and "interlocutor" may be switched to each other in conversation.

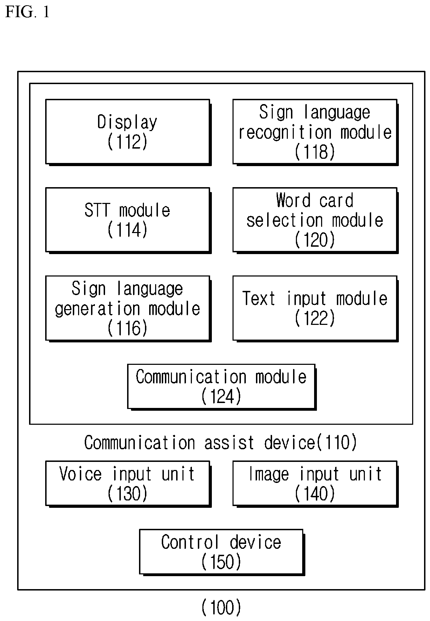

FIG. 1 illustrates an image display device 110 for communication using a sign language and a system 100 including the same.

The communication system 100 may include a communication assist device 110, a voice input unit 130, an image input unit 140, and a sign language recognition assist device 150.

The communication assist device 110 may include a display 112. The display 112 may be implemented as a transparent display. Accordingly, two or more users may be located on opposite sides of the display 112 and communicate with each other through a sign language and AAC. Alternatively, in case the display 112 is implemented as a general display, a plurality of communication assist devices 110 may be communicatively connected so that two or more users located at a distance may communicate through a sign language and AAC. Accordingly, in a contact-free environment, a person who feels discomfort in voice communication, may deliver a sentence to an interlocutor through a sign language and/or AAC by using the communication assist device 110.

The display 112 may display another screen User Interface (UI)/user eXperience (UX) according to a user's characteristic (communication method). In addition, the display 112 may keep displaying a part of an existing conversation content on the display 112 so that users may easily browse the existing conversation content at any time.

The communication assist device 110 may further include a predetermined module in order to promote communication using a sign language. Specifically, the communication assist device 110 may include some of a speech-to-text (STT) module 114, a sign language generation module 116, a sign language recognition module 118, a word card selection module 120, a text input module 122, and a communication module 124.

The STT module 114 may convert a voice text into text data. Specifically, the STT module 114 may convert voice data input from the voice input unit 130 into text data and transmit the text data to the display 112. In addition, the display 112 may display the text data.

The sign language generation module 116 may convert voice data into sign language data. Specifically, the sign language generation module 116 may convert voice data input from the voice input unit 130 into sign language data and transmit the sign language data to the display 112. In addition, the display 112 may display a sign language image according to the sign language data.

The sign language recognition module 118 analyzes a motion of a user in image data and extracts a sign language sentence intended by the user from the motion of the user. In addition, the sign language recognition module 118 may convert the extracted sign language sentence into text data and transmit the text data to the display 112. In addition, the display 112 may display the text data.

The word card selection module 120 may provide a word card to the display 112 so that a user may express a simple meaningful expression by AAC. Accordingly, the user may select a word card provided by the word card selection module 120, while communicating by voices, a text, and a sign language, thereby delivering his intention to an interlocutor more accurately. Herein, since the word card includes an image visualizing a word, the interlocutor may grasp the user's intention by seeing the image of the word card. For example, the word card selection module 120 may provide word cards, which represent the user's feelings such as happiness, boredom, sadness, annoyance, and anger, and display an image included in a word card on the display 112 according to the user's choice. Accordingly, the interlocutor may easily grasp the user's intention by referring to the image included in the word card together with a text or a sign language image input by the user.

The text input module 122 may provide a text input user interface (UI), in which a user inputs a text directly, on the display 112. In case a user has trouble providing his intention accurately through a sign language or ACC, the user may deliver a text directly to an interlocutor by using the text input UI of the text input module 122.

The communication module 124 may enable the communication assist device 110 to be communicatively connected to an external device. If there is difficulty in communication, a third party like a sign language interpreter may join the conversation by using the communication module 124.

The voice input unit 130 may be implemented as a device like a microphone that receives voice information as an input. In addition, the image input unit 140 may be implemented as a device like a camera that receives image information as an input. In addition, the control device 150 may be used to control the start and end of recording a sign language image.

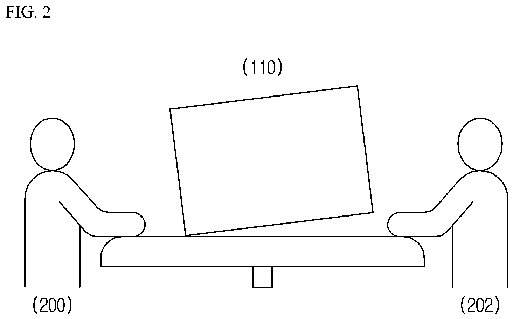

FIG. 2 describes an embodiment of usage aspect of the communication assist device 110.

According to FIG. 2, the communication assist device 110, which is implemented as a transparent display, is located in the middle of a desk, and two users 200 and 202 are located on opposite sides of the desk. Accordingly, the users 200 and 202 does not face each other but may communicate using the communication assist device 110. Thus, contagion between the users 200 and 202 may be prevented, and anyone who has trouble communicating may easily deliver his intention to an interlocutor by using the data input, conversion and display functions of the communication assist device 110.

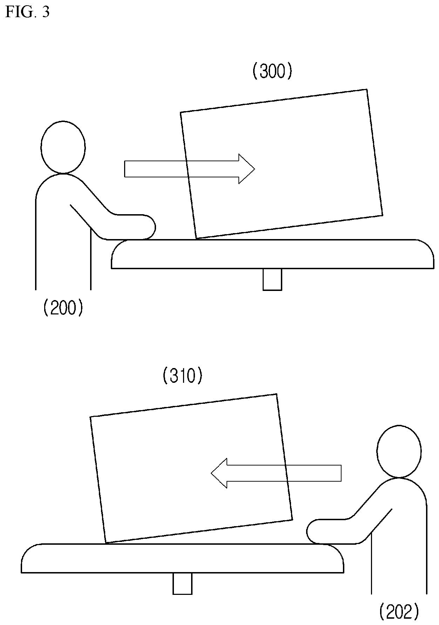

FIG. 3 describes another embodiment of usage aspect of the communication assist device 110.

According to FIG. 3, a first communication assist device 300 and a second communication assist device 310, which are implemented as general displays without light transmission, are located in the middle of each desk. The user 200 may use the first communication assist device 300, and the user 202 may use the second communication device 310. The first communication assist device 300 and the second communication assist device 310 may be communicatively connected to each other, so that the users 200 and 202 may communicate with each other. Accordingly, like in the embodiment of FIG. 2, contagion between the users 200 and 202 may be prevented, and anyone who has trouble communicating may easily deliver his intention to an interlocutor by using the data input, conversion and display functions of the communication assist devices 300 and 310. The first communication assist device 300 and the second communication assist device 310 of FIG. 3 may have the same configuration as the communication assist device 110 of FIG. 1.

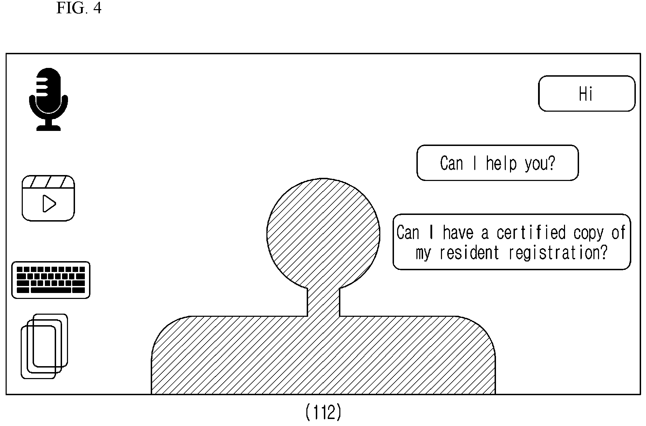

FIG. 4 shows an embodiment of an image that is input into the display 112.

In FIG. 4, the display 112 may be implemented as a transparent display. Herein, an interlocutor may see a user's appearance as it is. In addition, the display 112 may display various functions on the left side, which are provided by the communication assist device 110. A function of the communication assist device 110 may be displayed as an icon, and when a user presses the icon, the function corresponding to the icon may be activated. In addition, the display 112 may display an existing conversation content on the right side. Accordingly, as the existing conversation content keeps being displayed on the display 112, users may easily browse the existing conversation content at any time. The locations of the function icon and the conversation content on the display 112 may be differently determined according to an embodiment.

Hereinafter will be provided an embodiment of a method for converting a sign language sentence into an appropriate text when a user is communicating by a sign language.

When an actual user of a sign language inputs a sign language sentence into the communication assist device 110, the sign language is analyzed in gloss units and thus an analysis result is derived. Herein, if a sign language motion of the user is inaccurate or a sign language image is distorted because of a surrounding environment, a gloss may be recognized as a different meaning. Accordingly, the sign language sentence may be interpreted differently from the user's intention.

In order to solve the problem, the present disclosure may provide a method of inferring a meaning of a whole sign language sentence, which includes calculating a recognition accuracy of each gloss, neglecting a result value of a specific gloss, if a recognition accuracy of the specific gloss is equal to or smaller than a predetermined value, and inferring the meaning of the whole sign language sentence based on another sign language gloss with a high recognition accuracy. The method of inferring a meaning of a sign language sentence based on a recognition accuracy may be applied to the sign language recognition module 118.

In the present disclosure, a recognition accuracy represents a similarity between a current gloss and a most similar gloss that is already learnt and most similar to the current gloss. That is, in case a current gloss nearly corresponds to a specific most similar gloss, a recognition accuracy may be determined as almost 100%. On the other hand, in case the current gloss does not clearly correspond to any gloss, the recognition accuracy may be determined to be low.

The predetermined value is any value between 10% and 90%. As the predetermined value is lower, the sign language recognition module 118 may generate a sign language sentence by using a gloss with a low recognition accuracy, so that an error rate may increase. On the other hand, as the predetermined value is higher, the sign language recognition module 118 may generate a sign language sentence only by using a gloss with a high recognition accuracy, so that the error rate may be reduced. However, since too many glosses are filtered, whole sign language sentences may be difficult to infer and complete. Accordingly, in order to reduce an error but increase convenience in interpreting a sign language sentence, a predetermined value needs to be determined within an adequate range.

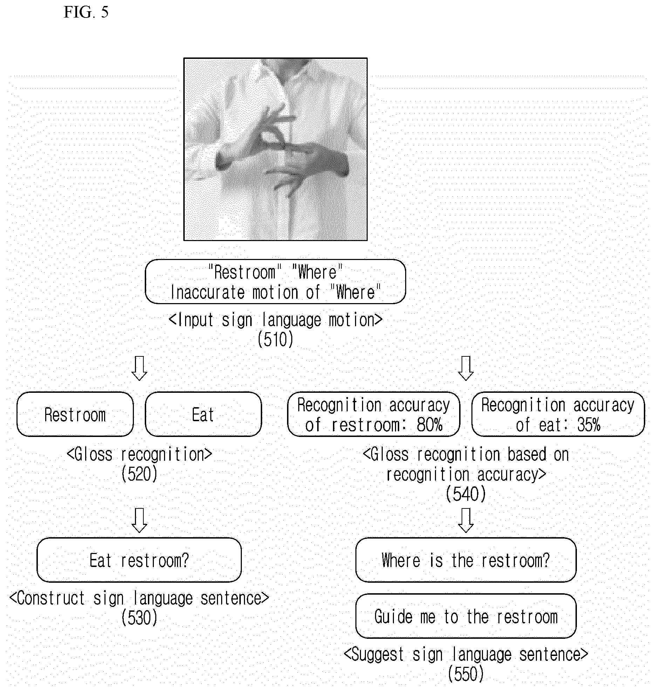

FIG. 5 describes an example of a method for inferring a sign language sentence based on a recognition accuracy.

At step S501, a sign language sentence meaning 'Where is the restroom?' is input. The sign language sentence consists of a gloss meaning "restroom" and a gloss meaning "where". However, in this case, if any one of the sign language expressions for "restroom" and "where" is mistaken, the sign language sentence may be translated as an entirely different meaning. In FIG. 5, a method of inferring a sign language sentence based on a recognition accuracy is described under the assumption that a sign language motion corresponding to "where" is inaccurate.

Step S520 and step S530 describe an existing method of constructing a sign language sentence not based on a recognition accuracy. At step S520, as described above, in case a sign language motion corresponding to "where" is inaccurate, the sign language motion may be mistaken as "eat". Accordingly, at step S530, the sign language sentence may be translated as 'Eat the restroom?'.

To solve this problem, at step S540 and step S550, the meaning of a sign language sentence may be inferred using only sign language glosses with a recognition accuracy of 50% or above.

At step S540, recognition accuracies for two glasses may be calculated. Herein, most similar words to the two glosses are determined. For example, a most similar word to a gloss corresponding to "restroom" may be accurately recognized as "restroom", and a most similar word to a gloss corresponding to "where" may be mistaken as "eat". In addition, a recognition accuracy between each gloss and a most similar word is calculated. For example, a recognition accuracy of the gloss corresponding to "restroom" may be calculated as 80%, and a recognition accuracy for "eat" may be calculated as 35%.

At step S550, a whole sign language sentence is inferred based on a gloss with a recognition accuracy of 50% or above. Accordingly, "eat" with the recognition accuracy below 50% is neglected in the sign language inference process. That is, the meaning of the sign language sentence may be inferred based on the sign language of "restroom" with the recognition accuracy above 50%. For example, candidate sentences such as "Where is the restroom?" and "Guide me to the restroom" may be suggested. In addition, according to a user's choice, a sign language may be translated into a text.

According to an embodiment, in case every gloss of a sign language sentence has a recognition accuracy below a predetermined value, the meaning of the sign language sentence is not inferred. In addition, the communication assist device 110 may request retransmission of the sign language sentence. For example, the display 112 may display a message like "The sign language is not correctly recognized. Please speak the sign language again."

According to an embodiment, when glosses of a plurality of segments include a first gloss with a recognition accuracy greater than a predetermined value and a second gloss with a recognition accuracy smaller than the predetermined value, the sign language recognition module 118 may determine a plurality of gloss candidates replacing the second gloss based on the first gloss. Alternatively, in the above case, the sign language recognition module 118 may determine a plurality of gloss candidates replacing the second gloss based on the first gloss and a previous conversation content. In addition, the sign language recognition module 118 may extract a sign language sentence based on a gloss candidate selected from the plurality of gloss candidates and the first gloss. Herein, the sign language recognition module 118 may determine a priority order of the plurality of gloss candidates according to a similarity to the second gloss, and the display 112 may display the plurality of gloss candidates according to the priority order.

According to an embodiment, the sign language recognition module 118 may infer the meaning of a sign language by considering an existing conversation content. For example, in case "restroom" is the only gloss with a recognition accuracy equal to or greater than 50% in a sign language sentence, the sign language sentence including "restroom" may be completed by considering an existing conversation content.

According to an embodiment, when a user asks a question "Where is the restroom?" through a sign language, the sign language recognition module 118 may recognition a gender of the user through an image, and if the user is a male, the sign language recognition module 118 may show the location of the men's room, and if the user is a female, the sign language recognition module 118 may show the location of the women's room.

Herein, a method of deriving a recognition accuracy of a gloss will be described.

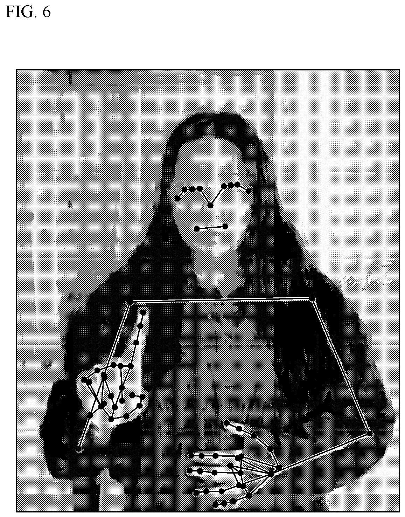

First, a sign language image of a user is input through an image input unit 140. In addition, the sign language recognition module 118 recognizes the user of the sign language image by using an artificial intelligence technology, detects a joint part of the user, and thus extracts skeleton information for tracking a motion of the user. In the present disclosure, FIG. 6 is an example of skeleton information extracted from a sign language image. In addition, the sign language recognition module 118 may compare a motion of the user according to the skeleton information and a motion of a gloss with a specific meaning that is already stored. In addition, a similarity degree between the two motions is determined as a recognition accuracy of a current gloss.

The sign language recognition module 118 may include an AI learning model for inferring a gloss from a gloss and an AI learning model for inferring a natural language sentence from a gloss. An AI learning model may consist of a convolution neural network (CNN) and a transformer model. An AI learning model may be trained by learning data composed of sign language motions and glosses and learning data composed of glosses and natural language sentences.

The learning data may be augmented in amount up to 100 times by using unique data augmentation techniques (shift, resize, frame manipulation, etc.). In addition, in order to prevent overfitting at each sign language translation step, motion data not to be translated and a result of a general natural language model may be used to train an AI learning model.

Training of an AI learning model is performed based on consecutive glosses. Specifically, consecutive glosses may be partitioned into a plurality of segments. In addition, during a training phase, a probability of a label for each segment is calculated. In addition, an unknown label (UNK) is allocated to a motion that is not learned.

In addition, the sign language recognition module 118 may infer the meaning of a gloss of an image by using the trained AI learning model. Herein, the sign language recognition module 118 may partition an input sign language image into a plurality of segments. In addition, the sign language recognition module 118 may determine an expression with a highest priority among sign language expression probabilities of each segment. After identifying every sign language expressions of each motion, the sign language recognition module 118 may translate all the sign language expressions into general natural language sentences. For an inference result of the sign language recognition module 118, an arrangement of sign language expressions and a character string of a general natural language sentence may be output.

Hereinafter, the control device 150 will be described.

In order to recognize a sign language, it is important to recognize times when a user starts the sign language and finishes the sign language respectively. Filming a sign language may start by inputting a signal into a start button of the control device 150. In addition, the filming of the sign language may automatically finish one second after both hands disappear from a camera. When the filming ends, inference of the sign language may be performed based on a captured sign language image.

The control device 150 may be a personal smart phone. Herein, the smart phone may be used by a remote controller. Alternatively, the control device 150 may be a dedicated device including a filming or recording button. By using the control device 150, the start and end of sign language recognition may be controlled. In order to improve user experience, a remote web page dedicated to a smart phone owned by a user may be developed. In addition, the web page may be easily accessed by the control device 150 that captures an application page on a tablet or PC or a QR marker in the real space.

In case user authorization is performed by capturing a QR marker, the user may be automatically logged in through an ID of a PC or tablet. Otherwise, each user may be logged in by using his own ID/PW, and thus independent access may be performed. In addition, to prevent duplicate access, if a device has already accessed, another device may be restricted from accessing so that synchronous access may be restricted.

In case the filming button of the control device 150 is pressed, the same process may be performed as when the filming button is pressed on a tablet or PC. In case the recording button of the control device 150 is pressed, the same process may also be performed as when the recording button is pressed on a tablet or PC. However, a PC or tablet provided in front of a user may be used as a filming agent, and a microphone of a smart phone may be used as a voice recording agent. The agents of image filming and voice recording may be modified.

Alternatively, the control device 150 may be implemented as a foot button. Herein, the start and end points of sign language recognition may be determined using the foot button.

According to an embodiment, the start and end times of sign language recognition may be determined through recognition of a specific hand shape, irrespective of the control device 150. For example, sign language recognition may start when a hand is suddenly raised outside a screen and enters the screen. In addition, the sign language recognition may end when the hand is lowered inside the screen and gets out of the screen.

The various embodiments of the present disclosure are not intended to list all possible combinations but to illustrate representative aspects of the present disclosure. The matters described in the various embodiments may be applied independently or in a combination of two or more.

Also, the various embodiments of the present disclosure may be implemented by hardware, firmware, software, or a combination thereof. With hardware implementation, the embodiment may be implemented by using at least one or more of a group of application specific integrated circuits (ASICs), digital signal processors (DSPs), digital signal processing devices (DSPDs), programmable logic devices (PLDs), field programmable gate arrays (FPGAs), general-purpose processors, controllers, micro controllers, and microprocessors. For example, it is obvious that various embodiments of the present disclosure may be implemented in forms of programs stored in a non-transitory computer-readable medium available at an end or edge or also in forms of programs stored in a non-transitory computer-readable medium available at an edge or cloud.

For example, a method of displaying information according to an embodiment of the present disclosure may be implemented in a program form stored in a non-transitory computer-readable medium, and the above-described method of performing phase unwrapping in a block unit based on directionality may also be implemented in a form of computer program.

The scope of the present disclosure includes software or machine-executable instructions (for example, an operating system, an application, firmware, a program, etc.), which cause an operation according to the methods of the various embodiments to be performed on a device or a computer, and includes a non-transitory computer-readable medium storing such software or instructions to execute on a device or a computer.

For those skilled in the art, the present disclosure as described above may be subject to various substitutions, modifications and changes within the scope of technical idea of the present disclosure, so that the scope of the present disclosure is not limited to the above-described embodiments and the accompanying drawings.

## Claims

1. A communication assist device for communication using a sign language, the communication assist device comprising:
a sign language recognition module for extracting a sign language sentence from an analyzed motion of a user in image data; and
a display for displaying the extracted sign language sentence.

2. The communication assist device of claim 1, further comprising:
an STT module for converting voice data into text data; and
a sign language generation module for converting voice data into sign language data.

3. The communication assist device of claim 1, further comprising a word card selection module for providing a word card selectable for the user to the display,
wherein the sign language recognition module extracts the sign language sentence based on the selected word card.

4. The communication assist device of claim 1, further comprising a text input module for providing a user interface for the user to input a text to the display,
wherein the text input module is activated when the sign language recognition module fails to extract the sign language sentence.

5. The communication assist device of claim 1, further comprising a communication module for controlling the communication assist device to be communicatively connected with external device,
wherein the communication module controls the communication assist device to be connected with the external device when the sign language recognition module fails to extract the sign language sentence.

6. The communication assist device of claim 1, wherein the sign language recognition module is configured to:
partition the image data into a plurality of segments,
determine a recognition accuracy of each gloss of the plurality of segments, and
extract a sign language sentence based on a gloss with the recognition accuracy greater than a predetermined value among glosses of the plurality of segments.

7. The communication assist device of claim 6, wherein the recognition accuracy is determined based on a similarity between a gloss of a segment and a similar gloss, and the similar gloss is a gloss that is most similar to the gloss of the segment.

8. The communication assist device of claim 7, wherein the sign language recognition module extracts skeleton information for tracking a motion of the user by detecting a joint part of the user from the image data and compares a gloss of the user according to the skeleton information and the similar gloss.

9. The communication assist device of claim 6, wherein the display displays a message for requesting retransmission of a sign language sentence, when every recognition accuracy of the glosses of the plurality of segments is smaller than the predetermined value.

10. The communication assist device of claim 6, wherein the sign language recognition module extracts a sign language sentence based on a gloss with the recognition accuracy greater than the predetermined value and a previous conversation content.

11. The communication assist device of claim 6, wherein, when the glosses of the plurality of segments include a first gloss with a recognition accuracy greater than the predetermined value and a second gloss with a recognition accuracy smaller than the predetermined value, the sign language recognition module determines a plurality of gloss candidates replacing the second gloss based on the first gloss and extracts a sign language sentence based on a gloss candidate selected from the plurality of gloss candidates and the first gloss.

12. The communication assist device of claim 6, wherein, when the glosses of the plurality of segments include a first gloss with a recognition accuracy greater than the predetermined value and a second gloss with a recognition accuracy smaller than the predetermined value, the sign language recognition module determines a plurality of gloss candidates replacing the second gloss based on the first gloss and a previous conversation content and extracts a sign language sentence based on a gloss candidate selected from the plurality of gloss candidates and the first gloss.

13. The communication assist device of claim 11, wherein the sign language recognition module determines a priority order for the plurality of gloss candidates according to a similarity to the second gloss, and
wherein the display displays the plurality of gloss candidates according to the priority order.

14. The communication assist device of claim 1, wherein the display is a transparent display.
